# FASCICULE DE BREVET EUROPEEN

(11) **EP 3 554 850 B1**
(45) Date de publication et mention de la délivrance du brevet: **14.07.2021**
(21) Numéro de dépôt: 17822393.9
(22) Date de dépôt: 08.12.2017
(51) Int. Cl.: B60C 1/00

(54) **BANDE DE ROULEMENT POUR PNEUMATIQUE COMPRENANT UN ÉLASTOMÈRE MODIFIÉ**
LAUFFLÄCHE FÜR REIFEN ENTHALTEND EIN VERÄNDERTES ELASTOMER
TREAD FOR A TIRE COMPRISING A MODIFIED ELASTOMER

(30) Priorité: 19.12.2016 FR 1662774
(43) Date de publication de la demande: 23.10.2019
(73) Titulaire: Compagnie Générale des Etablissements Michelin, 63000 Clermont-Ferrand (FR)
(72) Inventeur: DE-LANDTSHEER, Stéphanie, 63040 Clermont-Ferrand Cedex 9 (FR); LEDOUX, Céline, 63040 Clermont-Ferrand Cedex 9 (FR)
(74) Mandataire: Le Cam, Véronique Marie Christine
(86) Numéro de dépôt international: PCT/FR2017/053474
(87) Numéro de publication internationale: WO 2018/115631

(56) Documents cités:
- WO-A1-2015/018772
- FR-A1- 3 012 454

## Description

Le domaine de la présente invention est celui des bandes de roulement pour pneumatiques comprenant un élastomère modifié.

Au cours du roulage, une bande de roulement de pneumatique subit des sollicitations mécaniques et des agressions résultant du contact direct avec le sol, ce qui a pour effet de créer des amorces de fissure dans la bande de roulement. Ces sollicitations et ces agressions s'exercent sur la bande de roulement de façon cyclique à chaque tour de roue. Cette périodicité a pour conséquence que les amorces de fissure qui se créent dans la bande de roulement, ont tendance à se propager en surface ou à l'intérieur de la bande de roulement. La propagation de fissures dans la bande de roulement peut entraîner un endommagement de la bande de roulement et donc réduire la durée de vie de la bande de roulement ou du pneumatique.

Il est donc important de disposer de pneumatiques dont la bande de roulement présente une résistance à la propagation de fissure suffisamment forte pour minimiser l'effet d'une amorce de fissure sur la durée de vie de la bande de roulement. Pour résoudre ce problème, les manufacturiers de pneumatique utilisent par exemple du caoutchouc naturel dans les bandes de roulement en raison des propriétés de résistance à la propagation de fissure du caoutchouc naturel comme mentionné dans « Table 3.7 Comparison of elastomers properties » p. 162-163, Rubber Technology Handbook Hofmann, Hanser publishers (1989).

Néanmoins il existe toujours un besoin d'améliorer encore la résistance à la propagation de fissure des bandes de roulement de pneumatique.

Les Demanderesses ont découvert que l'introduction d'un certain taux d'un élastomère fonctionnalisé spécifique dans une composition de caoutchouc spécifique utilisée en tant que bande de roulement d'un pneumatique permet d'améliorer la résistance à la propagation de fissure sans détérioration substantielle des autres performances de la bande de roulement que sont l'usure et la résistance au roulement.

Ainsi un premier objet de l'invention est une bande de roulement pour pneumatique comprenant une composition à base d'au moins :
- une matrice élastomère comprenant un polyisoprène et un élastomère diénique modifié, lequel élastomère diénique modifié comprend au sein de sa structure au moins un groupe alcoxysilane lié à l'élastomère par l'atome de silicium se situant dans la chaîne élastomère principale, et au moins une fonction comprenant un atome d'azote.
- une charge renforçante comprenant majoritairement du noir de carbone.

L'invention a aussi pour objet un pneumatique qui comprend la bande de roulement conforme à l'invention.

L'invention a également pour objet un procédé pour préparer la bande de roulement conforme à l'invention.

L'invention a aussi pour objet un procédé pour préparer la composition de caoutchouc conforme à l'invention.

### DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomères présents dans la matrice élastomère, la matrice élastomère désignant la totalité des élastomères présents dans la composition de caoutchouc.

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans la présente demande, par "majoritairement" ou "majoritaire" en liaison avec un composé, on entend que ce composé est majoritaire parmi les composés du même type dans la composition, c'est-à-dire que c'est celui qui représente la plus grande fraction pondérale parmi les composés du même type. Ainsi, par exemple, un élastomère majoritaire est l'élastomère représentant la plus grande fraction pondérale par rapport au poids total des élastomères dans la composition. De la même manière, une charge dite majoritaire est celle représentant la plus grande fraction pondérale par rapport au poids total de l'ensemble des charges de la composition. Egalement, une espèce fonctionnelle d'un élastomère diénique modifié dite majoritaire est celle représentant la plus grande fraction pondérale parmi les espèces fonctionnalisées constituant l'élastomère diénique, par rapport au poids total de l'élastomère diénique modifié. Dans un système comprenant un seul composé d'un certain type, celui-ci est majoritaire au sens de la présente invention.

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

La matrice élastomère de la composition de caoutchouc a pour caractéristique essentielle de comprendre un polyisoprène. Le polyisoprène peut être un élastomère de toute microstructure. De préférence le polyisoprène comporte un taux massique de liaison 1,4-cis d'au moins 90% de la masse du polyisoprène. Comme polyisoprène ayant cette microstructure préférentielle conviennent le caoutchouc naturel, un polyisoprène de synthèse ou leur mélange, plus particulièrement le caoutchouc naturel.

La matrice élastomère de la composition de caoutchouc de la bande de roulement du pneumatique conforme à l'invention comprend également un élastomère diénique modifié comprenant au sein de sa structure au moins une fonction aloxysilane, liée à l'élastomère par l'intermédiaire de l'atome de silicium, et une fonction comprenant un atome d'azote.

Par élastomère diénique, doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non). Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone.

Dans le cas de copolymères, ceux-ci contiennent de 20 % à 99 % en poids d'unités diéniques, et de 1 à 80 % en poids d'unités vinylaromatiques.

A titre de copolymères utilisables dans le cadre de l'invention, conviennent notamment ceux contenant de 80 % à moins de 100 % en poids, ou encore de 95% à 99% en poids, d'unités diéniques, et de plus de 0 à 20 % en poids, ou encore de 1% à 5% en poids d'unités vinylaromatiques, par rapport au poids total du copolymère.

A titre de diènes conjugués utilisables dans le procédé conforme à l'invention conviennent notamment le butadiène-1,3, le 2-méthyl-1,3-butadiène, les 2,3 di(alcoyle en C1 à C5)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène et le 2,4 hexadiène, etc.

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène et le vinylnaphtalène, etc.

L'élastomère diénique est choisi préférentiellement dans le groupe des élastomères diéniques fortement insaturés constitué par les polybutadiènes (BR), les polyisoprènes (IR) de synthèse, les copolymères de butadiène, en particulier les copolymères de butadiène et d'un monomère vinylaromatique, les copolymères d'isoprène et les mélanges de ces élastomères. De tels copolymères sont plus particulièrement des copolymères de butadiène-styrène (SBR), des copolymères d'isoprène-butadiène (BIR), des copolymères d'isoprène-styrène (SIR) et des copolymères d'isoprène-butadiène-styrène (SBIR). Parmi ces polymères, les copolymères de butadiène-styrène (SBR) sont particulièrement préférés.

Conviennent particulièrement à titre de copolymère de butadiène-styrène, les copolymères de butadiène-styrène ayant une teneur en styrène de plus de 0% et d'au plus 20%, ou encore d'au plus 5%, en poids d'unités styréniques par rapport au poids total du copolymère

L'élastomère diénique peut avoir toute microstructure qui est fonction des conditions de polymérisation utilisées. L'élastomère peut être à blocs, statistique, séquencé, microséquencé, etc .... Dans le cas d'un copolymère à base d'un diène et d'un vinylaromatique, notamment contenant du butadiène et du styrène, préférentiellement les deux monomères sont répartis statistiquement.

L'élastomère diénique modifié selon l'invention comprend au sein de sa structure au moins un groupe alcoxysilane lié à l'élastomère par l'intermédiaire de l'atome de silicium, et une fonction comprenant un atome d'azote.

Dans la présente description, la notion de groupe alcoxysilane situé au sein de la structure de l'élastomère s'entend comme un groupe dont l'atome de silicium est situé dans le squelette du polymère et directement relié à celui-ci. Ce positionnement au sein de la structure comprend les extrémités de chaînes polymères. Ainsi, le groupement terminal est inclus dans cette notion. Le groupe alcoxysilane n'est pas un groupe pendant.

Lorsque le groupe alcoxysilane se situe en bout de chaîne, on dira alors que l'élastomère diénique est fonctionnalisé en bout ou extrémité de chaîne.

Lorsque le groupe alcoxysilane se situe dans la chaîne élastomère principale, on dira alors que l'élastomère diénique est couplé ou encore fonctionnalisé en milieu de chaîne, par opposition à la position "en extrémité de chaîne" et bien que le groupement ne se situe pas précisément au milieu de la chaîne élastomère. L'atome de silicium de cette fonction lie les deux branches de la chaîne principale de l'élastomère diénique.

Lorsque l'atome de silicium est en position centrale auquel au moins trois branches élastomères sont liées formant une structure en étoile de l'élastomère, on dira alors que l'élastomère diénique est étoilé. L'atome de silicium est ainsi substitué par au moins trois branches de l'élastomère diénique.

Il convient de préciser qu'il est connu de l'homme du métier que lorsqu'un élastomère est modifié par réaction d'un agent de fonctionnalisation sur l'élastomère vivant issu d'une étape de polymérisation anionique, on obtient un mélange d'espèces modifiées de cet élastomère dont la composition dépend des condition de la réaction de modification et notamment de la proportion de sites réactifs de l'agent de fonctionnalisation par rapport au nombre de chaînes élastomères vivantes. Ce mélange comprend des espèces fonctionnalisées en extrémité de chaîne, couplées, étoilées et/ou non fonctionnalisées.

Selon une variante particulièrement préférée de l'invention, l'élastomère diénique modifié comprend à titre d'espèce majoritaire l'élastomère diénique fonctionnalisé en milieu de chaîne par un groupe alcoxysilane lié aux deux branches de l'élastomère diénique par l'intermédiaire de l'atome de silicium. Plus particulièrement encore, l'élastomère diénique fonctionnalisé en milieu de chaîne par un groupe alcoxysilane représente 70% en poids de l'élastomère diénique modifié.

Selon une mise en œuvre particulièrement préférée de l'invention, dans le groupe alcoxysilane le radical alcoxyle, éventuellement partiellement ou totalement hydrolysé en hydroxyle, comprend un radical alkyle en C₁-C₁₀, voire en C₁-C₈, de préférence en C₁-C₄, plus préférentiellement le radical alcoxyle est un méthoxy ou un éthoxy.

L'élastomère diénique modifié selon l'invention comprend également au moins une fonction comprenant un atome d'azote. Selon une mise en œuvre de l'invention, cette fonction comprenant un atome d'azote peut être directement reliée à l'élastomère par l'intermédiaire d'une liaison covalente ou d'un groupement hydrocarboné. Elle est alors généralement située en extrémité de chaîne.

Selon une autre mise en œuvre de l'invention, particulièrement préférée, cette fonction comprenant un atome d'azote est portée par le groupe alcoxysilane. Cette mise en œuvre s'entend comme n'excluant pas la présence d'une autre fonction au sein de l'élastomère.

Une combinaison de ces deux mises en œuvre est également envisagée selon l'invention.

Selon cette mise en œuvre particulièrement préférée, la fonction comprenant un atome d'azote est avantageusement portée par le silicium du groupe alcoxysilane, directement ou par l'intermédiaire d'un groupe espaceur.

Selon cette mise en œuvre le groupe alcoxysilane peut être représenté par la formule

(*-)ₐSi (OR')_{b}R_{c}X

dans laquelle,
- *- représente la liaison à une chaîne élastomère ;
- le radical R représente un radical alkyle substitué ou non substitué, étant en C₁-C₁₀, voire en C₁-C₈, de préférence un radical alkyle en C₁-C₄, plus préférentiellement méthyle et éthyle ;
- dans les radicaux alcoxyle de formule -OR', éventuellement partiellement ou totalement hydrolysés en hydroxyle, R' représente un radical alkyle, substitué ou non substitué, étant en C₁-C₁₀, voire en C₁-C₈, de préférence un radical alkyle en C₁-C₄, plus préférentiellement méthyle et éthyle ;
- X représente un groupement comprenant la fonction azotée ;
- a vaut 1 ou 2, b vaut 1 ou 2, et c vaut 0 ou 1 sous réserve que a+b+c =3.

L'homme du métier comprendra que la valeur de a est fonction du positionnement du groupe alcoxysilane au sein de la structure de l'élastomère. Lorsque a vaut 1, le groupe est situé en extrémité de chaîne. Lorsque a vaut 2, il est situé en milieu de chaîne.

On peut citer, à titre de fonction comprenant un atome d'azote, les fonctions amines. Conviennent particulièrement les amines primaires, protégées ou non par un groupement protecteur, secondaires, protégées ou non par un groupement protecteur, ou tertiaires.

Ainsi, à titre de fonction amine secondaire ou tertiaire, on peut citer les amines substituées par des radicaux alkyle en C₁-C₁₀, de préférence alkyle en C₁-C₄, plus préférentiellement un radical méthyle ou éthyle, ou alors les amines cycliques formant un hétérocycle contenant un atome d'azote et au moins un atome de carbone, de préférence de 2 à 6 atomes de carbone. Par exemple, conviennent les groupements méthylamino-, diméthylamino-, éthylamino-, diéthylamino-, propylamino-, dipropylamino-, butylamino-, dibutylamino-, pentylamino-, dipentylamino-, hexylamino-, dihexylamino-, hexaméthylèneamino-, de préférence les groupements diéthylamino- et diméthylamino-. Conviennent également lorsque l'amine est cyclique les groupements morpholine, piperazine, 2,6-diméthylmorpholine, 2,6-diméthylpiperazine, 1-éthylpiperazine, 2-méthylpiperazine, 1-benzylpiperazine, piperidine, 3,3-diméthylpiperidine, 2,6-dimethylpiperidine, 1-méthyl-4-(méthylamino)piperidine, 2,2,6,6-tetraméthylpiperidine, pyrrolidine, 2,5-diméthylpyrrolidine, azetidine, hexaméthylèneimine, heptaméthylèneimine, 5-benzyloxyindole, 3-azaspiro[5,5]undecane, 3-aza-bicycle[3.2.2]nonane, carbazole, bistriméthylsilylamine, la pyrrolidine et l'hexaméthylèneamine, de préférence les groupements pyrrolidine et l'hexaméthylèneamine.

De préférence, la fonction amine est une fonction amine tertiaire, de préférence diéthylamine ou diméthylamine.

Selon une variante de la mise en œuvre particulièrement préférée de l'invention selon laquelle la fonction comprenant l'atome d'azote est portée par le groupe alcoxysilane, cette fonction est directement liée à l'atome de silicium lui-même directement intégré à la chaine élastomère.

Selon une autre variante de la mise en œuvre particulièrement préférée de l'invention selon laquelle la fonction comprenant l'atome d'azote est portée par le groupe alcoxysilane, cette fonction est liée à l'atome de silicium par l'intermédiaire d'un groupement espaceur qui peut être un atome, notamment un hétéroatome, ou un groupe d'atomes. Le groupement espaceur peut être un radical hydrocarboné divalent, linéaire ou ramifié, aliphatique en C₁-C₁₈, saturé ou non, cyclique ou non, ou un radical hydrocarboné divalent aromatique en C₆-C₁₈ et peut contenir un ou plusieurs radicaux aromatiques et/ou un ou plusieurs hétéroatomes. Le radical hydrocarboné peut éventuellement être substitué.

Selon une variante préférée de l'invention, le groupement espaceur est un radical hydrocarboné divalent, linéaire ou ramifié, aliphatique en C₁-C₁₈, plus préférentiellement un radical hydrocarboné divalent aliphatique en C₁-C₁₀, plus préférentiellement encore un radical hydrocarboné divalent linéaire en C₂ ou C₃.

Les différents aspects, préférentiels ou non, qui précèdent et qui concernent notamment la nature de la fonction comprenant un atome d'azote, la nature du groupement espaceur, la nature du groupe alcoxysilane et la nature de l'élastomère diénique sont combinables entre eux, sous réserve de leur comptabilité.

L'élastomère diénique modifié selon l'invention peut être obtenu par un procédé tel que décrit ci-après.

La première étape d'un procédé de préparation de l'élastomère diénique modifié est la polymérisation anionique d'au moins un monomère diène conjugué ou la polymérisation d'au moins un monomère diène conjugué et un monomère vinylaromatique, en présence d'un initiateur de polymérisation.

Les monomères sont tels que décrits plus haut.

En tant qu'initiateur de polymérisation, on peut utiliser tout initiateur anionique monofonctionnel connu. Toutefois un initiateur contenant un métal alcalin tel que le lithium est utilisé à titre préférentiel.

Comme initiateurs organolithiens conviennent notamment ceux comportant une liaison carbone-lithium. Des composés représentatifs sont les organolithiens aliphatiques tels que l'éthyllithium, le n-butyllithium (n-BuLi), l'isobutyllithium, etc ...

Selon la mise en œuvre de l'invention selon laquelle l'autre fonction est directement liée à la chaîne l'élastomère, celle-ci peut être apportée par l'initiateur de polymérisation. De tels initiateurs sont par exemple des initiateurs de polymérisation à fonction amine qui conduisent à des chaînes vivantes ayant un groupement amine à l'extrémité non réactive de la chaîne.

A titre d'initiateurs de polymérisation à fonction amine, on peut citer de manière préférée les amidures de lithium, produits de la réaction d'un composé organolithien, de préférence alkyllithien, et d'une amine secondaire acyclique ou cyclique, de préférence cyclique.

A titre d'amine secondaire utilisable pour préparer les initiateurs, on peut citer la diméthylamine, diéthylamine, dipropylamine, di-n-butylamine, di-sec-butylamine, dipentylamine, dihexylamine, di-n-octylamine, di-(2-ethylhexyl)amine, di-cyclohexylamine, N-méthylbenzylamine, diallylamine, morpholine, piperazine, 2,6-diméthylmorpholine, 2,6-diméthylpiperazine, 1-éthylpiperazine, 2-méthylpiperazine, 1-benzylpiperazine, piperidine, 3,3-diméthylpiperidine, 2,6-dimethylpiperidine, 1-méthyl-4-(méthylamino)piperidine, 2,2,6,6-tetraméthylpiperidine, pyrrolidine, 2,5-diméthylpyrrolidine, azetidine, hexaméthylèneimine, heptaméthylèneimine, 5-benzyloxyindole, 3-azaspiro[5,5]undecane, 3-aza-bicycle[3.2.2]nonane, carbazole, bistriméthylsilylamine, la pyrrolidine et l'hexaméthylèneamine. L'amine secondaire, lorsqu'elle est cyclique, est de préférence choisie parmi la pyrrolidine et l'hexaméthylèneamine.

Le composé alkyllithien est de préférence l'éthyllithium, le n-butyllithium (n-BuLi), l'isobutyllithium, etc.

La polymérisation est de préférence effectuée en présence d'un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

La microstructure de l'élastomère peut être déterminée par la présence ou non d'un agent modifiant et/ou randomisant et les quantités d'agent modifiant et/ou randomisant employées. Préférentiellement, lorsque l'élastomère diénique est à base d'un diène et d'un vinylaromatique, un agent polaire est utilisé lors de l'étape de polymérisation dans des quantités telles qu'il favorise la répartition statistique du vinylaromatique le long des chaînes polymères.

De manière avantageuse, l'élastomère diénique vivant issu de la polymérisation est ensuite fonctionnalisé au moyen d'un agent de fonctionnalisation susceptible d'introduire un groupe alcoxysilane au sein de la structure polymère pour préparer l'élastomère diénique modifié selon l'invention.

La réaction de modification de l'élastomère diénique vivant, obtenu à l'issue de la première étape, peut se dérouler à une température comprise entre - 20°C et 100 C, par addition sur les chaînes polymères vivantes ou inversement d'un agent de fonctionnalisation non polymérisable susceptible de former un groupe alcoxysilane, l'atome de silicium s'intégrant au sein de la chaîne élastomère, porteur ou non d'une fonction comprenant un atome d'azote. Il s'agit particulièrement d'un agent de fonctionnalisation porteur de fonctions réactives vis-à-vis de l'élastomère vivant, chacune de ces fonctions étant directement liée à l'atome de silicium.

Ainsi, selon une variante préférée du procédé de synthèse de l'élastomère diénique modifié de l'invention, l'agent de fonctionnalisation répond à la formule :

(OR')_{d} Si(R)_{c}X

dans laquelle,
▪ dans les radicaux alcoxyle de formule -OR', éventuellement partiellement ou totalement hydrolysable, R' représente un radical alkyle, substitué ou non substitué, en C₁-C₁₀, voire en C₁-C₈, de préférence un groupe alkyle en C₁-C₄, plus préférentiellement méthyle et éthyle ;
▪ R représente un radical alkyle, substitué ou non substitué, en C₁-C₁₀, voire en C₁-C₈, de préférence un groupe alkyle en C₁-C₄, plus préférentiellement méthyle et éthyle ;
▪ X représente un groupement incluant une fonction comprenant un atome d'azote ;
▪ d vaut 2 ou 3, c vaut 0 ou 1, sous réserve que d+c =3.

La fonction comprenant un atome d'azote est telle que définie plus haut.

Selon une variante particulière de l'invention, la fonction comprenant un atome d'azote est une amine primaire, protégée ou non, secondaire, protégée ou non, ou tertiaire. L'atome d'azote peut alors être substitué par deux groupements, identiques ou différents, pouvant être un radical trialkyl silyl, le groupement alkyle ayant 1 à 4 atomes de carbone, ou un radical alkyle en C1-C10, de préférence alkyle en C1-C4, plus préférentiellement un radical méthyle ou éthyle, ou alors les deux substituants de l'azote forment avec celui-ci un hétérocycle contenant un atome d'azote et au moins un atome de carbone, de préférence de 2 à 6 atomes de carbone,

On peut citer par exemple à titre d'agent de fonctionnalisation les (N,N-dialkylaminoalkyl)trialcoxysilanes, les (N-alkylaminoalkyl)trialcoxysilanes dont la fonction amine secondaire est protégée par un groupement trialkyl silyl et les (aminoalkyl)trialcoxysilanes dont la fonction amine primaire est protégée par deux groupements trialkyl silyl, le groupement hydrocarboné divalent permettant de lier la fonction amine au groupe trialcoxysilane est le groupe espaceur tel que décrit plus haut, préférentiellement aliphatique en C₁-C₁₀, plus particulièrement linéaire en C₂ ou C₃.

L'agent de fonctionnalisation peut être choisi parmi le 3-(N,N-diméthylaminopropyl)triméthoxysilane, le 3-(N,N-diméthylaminopropyl)triéthoxysilane , le 3-(N,N-diéthylaminopropyl)triméthoxysilane, le 3-(N,N-diéthylaminopropyl)triéthoxysilane, le 3-(N,N-dipropylaminopropyl)triméthoxysilane, le 3-(N,N-dipropylaminopropyl)triéthoxysilane, le 3-(N,N-dibutylaminopropyl)triméthoxysilane, le 3-(N,N-dibutylaminopropyl)triéthoxysilane, le 3-(N,N-dipentylaminopropyl)triméthoxysilane, le 3-(N,N-dipentylaminopropyl)triéthoxysilane, le 3-(N,N-dihexylaminopropyl)triméthoxysilane, le 3-(N,N-dihexylaminopropyl)triéthoxysilane, le 3-(hexamethylèneaminopropyl)triméthoxysilane, le 3-(hexamethylèneaminopropyl)triéthoxysilane, le 3-(morpholinopropyl)triméthoxysilane, le 3-(morpholinopropyl)triéthoxysilane, le 3-(piperidinopropyl)triméthoxysilane, le 3-(piperidinopropyl)triéthoxysilane. Plus préférentiellement, l'agent de fonctionnalisation est le 3-(N,N-diméthylaminopropyl)triméthoxysilane.

L'agent de fonctionnalisation peut être choisi parmi le 3-(N,N-méthyltriméthylsilylaminopropyl)triméthoxysilane, le 3-(N,N-méthyltriméthylsilylaminopropyl)triéthoxysilane, le 3-(N,N-éthyltriméthylsilylaminopropyl)triméthoxysilane, le 3-(N,N-éthyltriméthylsilylaminopropyl)triéthoxysilane, le 3-(N,N-propyltriméthylsilylaminopropyl)triméthoxysilane, le 3-(N,N-propyltriméthylsilylaminopropyl)triéthoxysilane. Plus préférentiellement, l'agent de fonctionnalisation est le 3-(N,N-méthyltriméthylsilylaminopropyl)triméthoxysilane.

L'agent de fonctionnalisation peut être choisi parmi le 3-(N,N-bistriméthylsilylaminopropyl)triméthoxysilane et le 3-(N,N-bistriméthylsilylaminopropyl)triéthoxysilane. Plus préférentiellement, l'agent de fonctionnalisation est le 3-(N,N-bistriméthylsilylaminopropyl)triméthoxysilane.

Selon une variante avantageuse de l'invention, l'agent de fonctionnalisation est choisi parmi les (N,N-dialkylaminoalkyl)trialcoxysilanes; plus particulière alors l'agent de fonctionnalisation est le 3-(N,N-diméthylaminopropyl)triméthoxysilane.

Il convient de préciser qu'il est connu de l'homme du métier que lorsqu'on modifie un élastomère par réaction d'un agent de fonctionnalisation sur l'élastomère vivant issu d'une étape de polymérisation anionique, on obtient un mélange d'espèces modifiées de cet élastomère dont la composition dépend notamment de la proportion de sites réactifs de l'agent de fonctionnalisation par rapport au nombre de chaînes élastomères vivantes. Ce mélange comprend des espèces fonctionnalisées en extrémité de chaîne, couplées, étoilées et/ou non fonctionnalisées.

Le rapport molaire de l'agent de fonctionnalisation au métal de l'initiateur de polymérisation dépend essentiellement du type d'élastomère diénique modifié voulu. Ainsi, avec un rapport allant de 0,40 à 0,75, voire de 0,45 à 0,65, ou encore de 0,45 à 0,55, on privilégie la formation d'espèces couplées au sein de l'élastomère modifié, le groupe alcoxysilane se situant alors en milieu de chaîne. De la même manière, avec un rapport allant de 0,15 à 0,40, voire de 0,20 à 0,35, ou encore de 0,30 à 0,35, on forme majoritairement des espèces étoilées (3 branches) au sein de l'élastomère modifié. Avec un rapport supérieur ou égal à 0,75, voire supérieur à 1, on forme majoritairement des espèces fonctionnalisées en bout de chaîne.

Selon une mise en œuvre particulièrement préférée de l'invention, le rapport molaire entre l'agent de fonctionnalisation et l'initiateur de polymérisation varie de 0,35 à 0,65, préférentiellement de 0,40 à 0,60 et encore plus préférentiellement de 0,45 à 0,55.

Ainsi, selon une variante particulièrement préférée de l'invention, l'élastomère diénique modifié comprend à titre d'espèce majoritaire l'élastomère diénique fonctionnalisé en milieu de chaîne par un groupe alcoxysilane lié aux deux branches de l'élastomère diénique par l'intermédiaire de l'atome de silicium. Plus particulièrement encore, l'élastomère diénique fonctionnalisé en milieu de chaîne par un groupe alcoxysilane représente 70% en poids de l'élastomère diénique modifié.

Selon une mise en œuvre de cette variante, le groupe alcoxysilane comporte avantageusement un radical alcoxy, éventuellement partiellement ou totalement hydrolysé en hydroxyle.

Selon une autre mise en œuvre de cette variante, le groupe alcoxysilane porte avantageusement une fonction comprenant un atome d'azote telle que définie plus haut. Cette fonction est de préférence une fonction amine tertiaire telle que définie plus haut, notamment diéthylamino- ou diméthylamino-, liée à l'atome de silicium de préférence par l'intermédiaire d'un espaceur tel que défini plus haut, notamment un radical hydrocarboné divalent linéaire en C₂ ou C₃.

La combinaison de ces deux mises en œuvre constitue une mise en œuvre préférée de l'invention.

Selon les variantes de l'invention selon lesquelles l'agent de fonctionnalisation est porteur d'une fonction protégée, le procédé de synthèse peut se poursuivre par une étape de déprotection de cette fonction. Cette étape est mise en œuvre après la réaction de modification et est bien connue de l'homme du métier.

Selon des variantes de l'invention, le procédé de synthèse peut comprendre une étape d'hydrolyse des fonctions alcoxyles hydrolysables, par adjonction d'un composé acide, basique ou neutre tel que décrit dans le document EP 2 266 819 A1. Les fonctions hydrolysables sont alors transformées en fonction hydroxyles.

Le procédé de synthèse de l'élastomère diénique modifié selon l'invention peut se poursuivre de manière connue en soi par les étapes de récupération de l'élastomère modifié.

Selon des variantes de ce procédé, ces étapes comprennent une étape de stripping en vue de récupérer l'élastomère issu des étapes antérieures. Cette étape de stripping peut avoir pour effet d'hydrolyser tout ou partie des fonctions hydrolysables de l'élastomère diénique modifié. Avantageusement, au moins 50 à 70% molaire de ces fonctions peuvent ainsi être hydrolysées.

Selon des mises en œuvre particulièrement préférées de l'invention, l'élastomère modifié est un élastomère diénique pour lequel au moins une, au moins deux, au moins trois, au moins quatre des caractéristiques suivantes est respectée et de préférence toutes :
- la fonction comprenant un atome d'azote est une amine tertiaire, plus particulièrement un groupement diéthylamino- ou diméthylamino-,
- la fonction comprenant un atome d'azote est portée par le groupe alcoxysilane par l'intermédiaire d'un groupement espaceur étant un radical hydrocarboné aliphatique en C₁-C₁₀, plus préférentiellement encore le radical hydrocarboné linéaire en C₂ ou C₃,
- le groupe alcoxysilane est le méthoxysilane ou l'éthoxysilane, éventuellement partiellement ou totalement hydrolysé en silanol,
- l'élastomère diénique est un copolymère butadiène-styrène,
- l'élastomère diénique modifié est majoritairement fonctionnalisé en milieu de chaîne par un groupe alcoxysilane lié aux deux branches de l'élastomère diénique par l'intermédiaire de l'atome de silicium.

Préférentiellement, l'élastomère modifié selon l'invention est un élastomère diénique pour lequel :
- l'élastomère diénique est majoritairement fonctionnalisé en milieu de chaîne par un groupe alcoxysilane ;
- la fonction comprenant un atome d'azote est portée par le groupe alcoxysilane par l'intermédiaire d'un radical hydrocarboné linéaire en C₃,
- la fonction comprenant un atome d'azote est une amine tertiaire, plus particulièrement un groupement diéthylamino- ou diméthylamino-;
- le groupe alcoxysilane est le méthoxysilane ou l'éthoxysilane, éventuellement partiellement ou totalement hydrolysé en silanol,
- l'élastomère diénique est un copolymère butadiène-styrène.

La matrice élastomère de la composition de caoutchouc de la bande de roulement du pneumatique conforme à l'invention peut contenir au moins un autre élastomère diénique conventionnel, qu'il soit étoilé, couplé, fonctionnalisé ou non. Par autre élastomère diénique, on entend un ou plusieurs élastomères diéniques autres que le polyisoprène et l'élastomère diénique modifié décrit ci-dessus. Préférentiellement, cet autre élastomère diénique utilisé dans l'invention est choisi dans le groupe des élastomères diéniques constitué par les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères de butadiène-éthylène, les copolymères d'isoprène-butadiène (BIR), les copolymères d'isoprène-styrène (SIR) et les copolymères d'isoprène-butadiène-styrène (SBIR). On peut également envisager un coupage avec tout élastomère synthétique autre que diénique, voire avec tout polymère autre qu'élastomère, par exemple un polymère thermoplastique.

Selon un mode de réalisation de l'invention, la matrice élastomère de la composition de caoutchouc consiste en un mélange du polyisoprène et de l'élastomère diénique modifié.

Selon un mode de réalisation de l'invention, le polyisoprène est l'élastomère majoritaire au sein de la matrice élastomère, de préférence le polyisoprène représente au moins 50 pce.

Selon un mode de réalisation de l'invention, l'élastomère diénique modifié représente au plus 50 pce.

La composition de caoutchouc de la bande de roulement du pneumatique conforme à l'invention comprend également au moins une charge renforçante majoritairement constituée de noir de carbone.

De préférence, le noir de carbone présente une surface spécifique BET d'au moins 90 m²/g. A ce titre conviennent les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300 (grade ASTM), comme par exemple les noirs N115, N134, N234, N375. De manière plus préférentielle le noir de carbone présente une surface spécifique BET d'au moins 100 m²/g. Les noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à un élastomère isoprénique sous la forme d'un masterbatch (voir par exemple demandes WO 97/36724 ou WO 99/16600). La surface spécifique BET des noirs de carbone est mesurée selon la norme D6556-10 [méthode multipoints (au minimum 5 points) - gaz : azote - domaine de pression relative P/P0 : 0.1 à 0.3].

La charge renforçante peut également comprendre une charge renforçante autre que le noir de carbone. Par "charge renforçante autre que le noir de carbone", doit être entendu ici toute charge inorganique ou minérale, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique; une telle charge se caractérise généralement, de manière connue, par la présence de groupes hydroxyle (-OH) à sa surface. Comme autres charges renforçantes conviennent notamment des charges minérales du type siliceux, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. On peut citer comme exemple de silice utile pour les besoins de l'invention la silice « Ultrasil VN3 » commercialisée par la société Evonik. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Solvay, la silice « Hi-Sil » EZ150G de la société PPG, les silices « Zeopol » 8715, 8745 et 8755 de la Société Huber, les silices à haute surface spécifique telles que décrites dans la demande WO 03/016387.

L'état physique sous lequel se présente la silice est indifférent, que ce soit sous forme de poudre, de microperles, de granulés, ou encore de billes. Bien entendu on entend également par silice des mélanges de différentes silices.

Pour rendre la silice renforçante dans une composition de caoutchouc diénique, il est connu d'utiliser un agent de couplage pour coupler la silice à l'élastomère diénique.

L'agent de couplage, le plus souvent un silane, (ou agent de liaison) au moins bifonctionnel permet d'assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Le taux de l'agent de couplage est de 0 à moins de 2 pce. Comme agent de couplage sont utilisés notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevets WO 02/30939 (ou US 6,774,255), WO 02/31041 (ou US 2004/051210) ou encore des silanes ou POSS porteurs de groupements fonctionnels azo-dicarbonyle, tels que décrits par exemple dans les demandes de brevets WO 2006/125532, WO 2006/125533, WO 2006/125534. Selon un mode de réalisation de l'invention, le taux de noir de carbone dans la composition de caoutchouc est de 30 à 90 pce, préférentiellement de 30 à 70 pce, plus préférentiellement de 35 à 60 pce. Ces plages préférentielles s'appliquent à l'un quelconque des modes de réalisation de l'invention.

Selon un mode de réalisation préférentiel de l'invention, le taux de silice utilisée est supérieur à 0 pce et inférieur ou égal à 35 pce, de préférence va de 2 pce à 35 pce, de préférence de 3 à 30 pce, et notamment de 5 à 20 pce. Ces plages préférentielles s'appliquent à l'un quelconque des modes de réalisation de l'invention. Selon un mode de réalisation de l'invention, la composition de caoutchouc contient un agent de recouvrement de la silice. Parmi les agents de recouvrement de la silice, on peut citer par exemple des hydroxysilanes ou des silanes hydrolysables tels que des hydroxysilanes (voir par exemple WO 2009/062733), des alkylalkoxysilanes, notamment des alkyltriéthoxysilanes comme par exemple le 1-octyl-tri-éthoxysilane, des polyols (par exemple diols ou triols), des polyéthers (par exemple des polyéthylène-glycols), des amines primaires, secondaires ou tertiaires (par exemple des trialcanol-amines), une guanidine éventuellement substituée, notamment la diphénylguanidine, des polyorgano-siloxanes hydroxylés ou hydrolysables (par exemple des α,ω -dihydroxy-poly-organosilanes (notamment des α,ω-dihydroxy-polydiméthylsiloxanes) (voir par exemple EP 0 784 072), des acides gras comme par exemple l'acide stéarique. Lorsqu'un agent de recouvrement de la silice est utilisé, il est utilisé à un taux compris entre 0 et 5 pce. La composition de caoutchouc conforme à l'invention contient de préférence comme agent de recouvrement de la silice un polyéthylène glycol.

Selon un mode de réalisation de l'invention, la composition de caoutchouc comprend de 0 à moins de 1 pce, plus préférentiellement de 0 à moins de 0.5 pce d'un agent de couplage. Ce mode de réalisation, sous sa forme préférentiel ou non, s'applique à l'un quelconque des modes de réalisation de l'invention.

Selon un mode de réalisation préférentiel de l'invention, la composition de caoutchouc ne contient pas d'agent de couplage, ce qui revient à dire que le taux de l'agent de couplage est égal à 0 pce. Selon ce mode de réalisation, la silice n'est pas considérée comme une charge renforçante. Selon ce mode de réalisation, la composition de caoutchouc contient de préférence un agent de recouvrement de la silice tel que ceux par exemple mentionnés précédemment. L'agent de recouvrement de la silice est préférentiellement un polyéthylène glycol.

Selon ce mode de réalisation préférentiel où la silice n'est pas considérée comme une charge renforçante, le noir de carbone est de préférence la seule charge renforçante présente dans la composition de caoutchouc.

La composition de caoutchouc peut comporter également tout ou partie des additifs usuels habituellement utilisés dans les compositions d'élastomères comme par exemple des plastifiants, des pigments, des agents de protection tels que cires anti-ozone, anti-ozonants chimiques, anti- oxydants, des agents anti-fatigue, un système de réticulation, des accélérateurs ou retardateurs de vulcanisation, des activateurs de vulcanisation. Selon l'un quelconque mode de réalisation de l'invention, le système de réticulation est de préférence à base de soufre, mais il peut être également à base de donneurs de soufre, de peroxyde, de bismaléimides ou de leurs mélanges.

Selon l'un quelconque des modes de réalisation de l'invention, la quantité de plastifiant, notamment huile ou autre plastifiant liquide à 23°C est préférentiellement inférieure à 10 pce, plus préférentiellement inférieure à 5 pce.

La composition de caoutchouc peut être fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 110°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

Le procédé pour préparer la bande de roulement conforme à l'invention comprend par exemple les étapes suivantes :
- ajouter au cours d'une première étape dite non productive à la matrice élastomère, la charge renforçante, le cas échéant l'agent de couplage, en malaxant thermomécaniquement jusqu'à atteindre une température maximale comprise entre 110 et 200°C,
- refroidir l'ensemble à une température inférieure à 110°C,
- incorporer ensuite le système de réticulation,
- malaxer le tout jusqu'à une température maximale inférieure à 110°C pour obtenir un mélange,
- puis calandrer ou extruder le mélange obtenu pour former une bande de roulement.

Quel que soit le mode de réalisation de l'invention, la bande de roulement peut être à l'état cru, (avant réticulation ou vulcanisation) ou à l'état cuit (après réticulation ou vulcanisation).

Les caractéristiques précitées de la présente invention, ainsi que d'autres, seront mieux comprises à la lecture de la description suivante de plusieurs exemples de réalisation de l'invention, donnés à titre illustratif et non limitatif.

### EXEMPLES

### I. MESURES ET TESTS UTILISES

### Chromatographie d'exclusion stérique

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans le solvant d'élution à une concentration d'environ 1 g.L⁻¹. Puis la solution est filtrée sur filtre de porosité 0,45µm avant injection.

L'appareillage utilisé est une chaîne chromatographique "WATERS alliance". Le solvant d'élution est soit le tétrahydrofurane, soit le tétrahydrofurane + 1%vol. de diisopropylamine + 1%vol. de triéthylamine, le débit de 1 mL.min⁻¹, la température du système de 35° C et la durée d'analyse de 30 min. Un jeu de deux colonnes WATERS de dénomination commerciale "STYRAGEL HT6E" est utilisé. Le volume injecté de la solution de l'échantillon de polymère est 100 µL. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des SBR de microstructure suivante : 25% massique (par rapport à la masse du polymère) de motifs type styrène, 23% massique (par rapport à la partie butadiénique) de motifs type 1-2 et 50% massique (par rapport à la partie butadiénique) de motifs type 1-4 trans.

### Spectroscopie proche infrarouge (NIR)

La microstructure des élastomères est caractérisée par la technique de spectroscopie proche infrarouge (NIR).

La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN ¹³C. Le taux de styrène et la microstructure sont alors calculés à partir du spectre NIR d'un film d'élastomère d'environ 730 µm d'épaisseur. L'acquisition du spectre est réalisée en mode transmission entre 4000 et 6200 cm⁻¹ avec une résolution de 2 cm⁻¹, à l'aide d'un spectromètre proche infrarouge à transformée de Fourier Bruker Tensor 37 équipé d'un détecteur InGaAs refroidi par effet Peltier.

### Viscosité Mooney

Pour les polymères et les compositions de caoutchouc, les viscosités Mooney ML₍₁₊₄₎100°C sont mesurées selon la norme ASTM D-1646.

Un consistomètre oscillant est utilisé tel que décrit dans la norme ASTM D-1646. La mesure de plasticité Mooney se fait selon le principe suivant : l'élastomère ou la composition à l'état cru (i.e. avant cuisson) est moulé(e) dans une enceinte cylindrique chauffée à 100 °C. Après une minute de préchauffage, le rotor tourne au sein de l'éprouvette à 2 tours/minute et le couple utile pour entretenir ce mouvement après 4 minutes de rotation est mesuré. La plasticité Mooney ML₍₁₊₄₎ est exprimée en "unité Mooney" (UM, avec 1 UM = 0,83 N.m).

La différence entre la viscosité Mooney de la composition et la viscosité Mooney de l'élastomère permet de mesurer la processabilité ou mise en œuvre à cru. Plus cette différence est faible, meilleure est la mise en œuvre à cru.

### Calorimétrie différentielle :

Les températures de transition vitreuse (Tg) des élastomères sont déterminées à l'aide d'un calorimètre différentiel ("differential scanning calorimeter"), selon la norme ASTM E1356-08 qui date de 2014.

### Propriétés dynamiques

Les propriétés dynamiques, et en particulier tan δ max, sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 mm² de section), soumis à une sollicitation sinusoïdale en cisaillement simple alterné, à la fréquence de 10Hz, dans les conditions normales de température (40°C) selon la norme ASTM D 1349-99. On effectue un balayage en amplitude de déformation de 0,1% à 50% crête-crête (cycle aller), puis de 50% à 0,1% crête-crête (cycle retour). Le résultat plus particulièrement exploité est le facteur de perte tan δ. Pour le cycle retour, on indique la valeur maximale de tan δ observée, noté tan δ max. Cette valeur est représentative de l'hystérèse du matériau et dans le cas présent de la résistance au roulement : plus la valeur de tan δ max est faible, plus la résistance au roulement est basse. Dans les exemples, les résultats des propriétés dynamiques sont donnés en base 100.

### Résistance à la propagation de fissure :

La vitesse de fissuration a été mesurée sur des éprouvettes de compositions de caoutchouc, à l'aide d'une machine de fatigue cyclique (« Elastomer Test System ») du type 381, de la société MTS, comme expliqué ci-après.

La résistance à la fissuration est mesurée à l'aide de tractions répétées sur une éprouvette initialement accommodée (après un premier cycle de traction), puis entaillée. L'éprouvette de traction est constituée par une plaque de caoutchouc de forme parallélépipédique, par exemple d'épaisseur comprise entre 1 et 2 mm, de longueur entre 130 et 170 mm et de largeur entre 10 et 15 mm, les deux bords latéraux étant chacun recouverts dans le sens de la longueur d'un bourrelet de caoutchouc cylindrique (diamètre 5 mm) permettant l'ancrage dans les mors de la machine de traction. Les éprouvettes ainsi préparées sont testées à l'état neuf. Le test a été conduit à l'air, à une température de 20°C, 60°C ou 80°C. Après accommodation, 3 entailles très fines de longueur comprise entre 15 et 20 mm sont réalisées à l'aide d'une lame de rasoir, à mi-largeur et alignées dans le sens de la longueur de l'éprouvette, une à chaque extrémité et une au centre de cette dernière, avant le démarrage du test. A chaque cycle de traction, le taux de déformation de l'éprouvette est ajusté automatiquement de manière à maintenir constant le taux de restitution d'énergie (quantité d'énergie libérée lors de la progression de la fissure), à une valeur inférieure ou égale à environ 500 J/m². La vitesse de propagation de fissure est mesurée en nanomètre par cycle. La résistance à la propagation de fissure sera exprimée en unités relatives (u.r.) en divisant la vitesse de propagation du témoin par celle du mélange, les vitesses étant mesurées au même taux de restitution d'énergie. Une valeur supérieure à celle du témoin, arbitrairement fixée à 100, indique un résultat amélioré c'est-à-dire une résistance supérieure à la propagation de fissures.

### II. EXEMPLES DE REALISATION DE L'INVENTION

Les élastomères diéniques modifiés.

### Préparation du polymère A : SBR fonctionnel aminoalcoxysilane en milieu de chaîne selon l'invention

Dans un réacteur alimenté en continu agité de 32 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 2,900 kg.h-1, débit massique styrène = 0,615 kg.h-1, concentration massique en monomère = 11 wt.%, 60 ppm tétrahydrofurfuryl éthyle éther. Du n-butyllithium (n-BuLi) est introduit en quantité suffisante afin de neutraliser les impuretés protiques apportées par les différents constituants présents dans l'entrée du premier réacteur A l'entrée du réacteur, 980 µmol de n-BuLi pour 100 g de monomère sont introduits.

Les différents débits sont calculés afin que le temps de séjour moyen dans le réacteur soit de 40 min. La température est maintenue à 90 °C.

A la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 1,82 dL.g-1. La masse molaire moyenne en nombre, Mn, déterminée par la technique de SEC, est de 95600 g.mol-1 et l'indice de polymolécularité, Ip, est de 1,98.

En sortie du réacteur de polymérisation, 509 µmol pour 100 g de monomère de 3-(N,N-diméthylaminopropyl)triméthoxysilane (Agent de couplage et d'étoilage AdC) en solution dans le méthylcyclohexane sont ajoutés à la solution de polymère vivant (AdC/Li = 0,52).

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

"Le polymère ainsi traité est ensuite séparé de sa solution par une opération de stripping à la vapeur d'eau, puis séché sur un outil à cylindres à 100 °C.

La viscosité inhérente ""finale"" mesurée est de 2,31 dL.g-1. Le saut de viscosité, défini comme le rapport de ladite viscosité ""finale"" sur ladite viscosité ""initiale"", est ici de 1,27.

La viscosité Mooney de ce polymère A est de 70.

La masse molaire moyenne en nombre, Mn, déterminée par la technique de SEC, est de 169 000 g.mol-1 et l'indice de polymolécularité, Ip, est de 1,65.

La microstructure de ce polymère est déterminée par la méthode NIR. Le taux de motifs 1,2 est de 23,8 % par rapport aux unités butadiène. Le taux massique de styrène est de 15 %.

La température de transition vitreuse de ce polymère est de - 65 °C.

### Préparation du polymère B : SBR fonctionnel aminoalcoxysilane en milieu de chaîne selon l'invention

Dans un réacteur alimenté en continu agité de 32 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 4,013 kg.h-1, débit massique styrène = 0,122 kg.h-1, concentration massique en monomère = 9,75 wt.%, 15 ppm tétrahydrofurfuryl éthyle éther. Du n-butyllithium (n-BuLi) est introduit en quantité suffisante afin de neutraliser les impuretés protiques apportées par les différents constituants présents dans l'entrée du premier réacteur A l'entrée du réacteur, 850 µmol de n-BuLi pour 100 g de monomère sont introduits.

Les différents débits sont calculés afin que le temps de séjour moyen dans le réacteur soit de 35 min. La température est maintenue à 95 °C.

A la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 1,98 dL.g-1. La masse molaire moyenne en nombre, Mn, déterminée par la technique de SEC, est de 90 000 g.mol-1 et l'indice de polymolécularité, Ip, est de 1,90.

En sortie du réacteur de polymérisation, 440 µmol pour 100 g de monomère de 3-(N,N-diméthylaminopropyl)triméthoxysilane (Agent de couplage et d'étoilage AdC) en solution dans le méthylcyclohexane sont ajoutés à la solution de polymère vivant (AdC/Li = 0,52)..

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100 °C.

La viscosité inhérente "finale" mesurée est de 2,52 dL.g-1. Le saut de viscosité, défini comme le rapport de ladite viscosité "finale" sur ladite viscosité "initiale", est ici de 1,27.

La viscosité Mooney de ce polymère B est de 70.

La masse molaire moyenne en nombre, Mn, déterminée par la technique de SEC, est de 168 600 g.mol-1 et l'indice de polymolécularité, Ip, est de 1,68.

La microstructure de ce polymère est déterminée par la méthode NIR. Le taux de motifs 1,2 est de 12,7 % par rapport aux unités butadiène. Le taux massique de styrène est de 2,1 %.

La température de transition vitreuse de ce polymère est de - 88 °C.

### Exemples comparatifs de compositions de caoutchouc

On compare trois compositions reportées C2, C3 et T1.

Les compositions C2 et C3 sont conformes à l'invention en ce qu'elles comprennent du noir de carbone comme charge majoritaire et la matrice élastomère comprend un polyisoprène, ici du caoutchouc naturel, et un élastomère diénique modifié conforme à l'invention. Elles diffèrent entre elles par la nature de l'élastomère diénique modifié. La composition C2 diffère de la composition C3 en ce que l'élastomère diénique modifié a une Tg différente.

La composition Tl dans laquelle le noir de carbone est la charge renforçante majoritaire et la matrice élastomère contient 100% de caoutchouc naturel est la composition témoin des compositions C2 et C3.

Les compositions Tl, C2 et C3 sont préparées conformément au procédé décrit précédemment.

Les formulations sont exprimées en pourcentage en poids pour 100 parties en poids d'élastomère (pce) et consignées dans le tableau I ci-après :

**Tableau I**

| **Composition** | **T1** | **C2** | **C3** |
|---|---|---|---|
| **NR (1)** | 100 | 50 | 50 |
| **SBR A** | | 50 | |
| **SBR B** | | | 50 |
| **Silice (2)** | 15 | 15 | 15 |
| **Noir (3)** | 40 | 40 | 40 |
| **Antioxydant (4)** | 2,5 | 2,5 | 2,5 |
| **Paraffine** | 1 | 1 | 1 |
| **PEG (5)** | 2,5 | 2,5 | 2,5 |
| **ZnO** | 2,7 | 2,70 | 2,70 |
| **Acide stéarique** | 1 | 1 | 1 |
| **Soufre** | 1,7 | 1,7 | 1,7 |
| **Accélérateur (6)** | 1,1 | 1,1 | 1,1 |

| | | | |
|---|---|---|---|
| *(1) caoutchouc naturel* *(2) silice « Ultrasil VN3 » de la société Evonik* *(3) N115 de la société Cabot* *(4) N-1,3-diméthylbutyl-N-phénylparaphenylènediamine, « Santoflex 6-PPD » de la société Flexsys* *(5) polyéthylèneglycol « CARBOWAX 8000 » de la société Dow Corning* *(6) N-cyclohexyl-2-benzothiazol-sulfénamide (« Santocure CBS » de la société Flexsys)* | | | |

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, comme bande de roulement de pneumatique.

Les résultats sont consignés dans les tableaux ci-après pour les compositions C2 et C3 et la composition témoin Tl.

Les propriétés des mélanges sont appréciées via les mesures en dynamique et en cisaillement à 80 et 100°C et sont reportées dans le tableau II:

**Tableau II**

| **Composition** | **G*50% à 80°C** | **Tan(d) max à 80°C** | **G*50% à 100°C** | **Tan(d) max à 100°C** |
|---|---|---|---|---|
| **T1** | **100** | **100** | **100** | **100** |
| **C2** | 120 | 99 | 114 | 94 |
| **C3** | 125 | 90 | 119 | 88 |

Les compositions C2 et C3 ont des valeurs de G*50% plus élevées que la composition T1. Elles sont donc plus rigides que la composition T1.

Les compositions C2 et C3 selon l'invention ont un niveau d'hystérèse équivalent voire plus faible que la composition T1 à 80°C et 100°C.

Le compromis rigidité - hystérèse des compositions C2 et C3 est donc amélioré.

### Résistance à la propagation de fissure :

**Tableau III :**

| **Composition** | **Résistance à la propagation de fissure À 80°C** |
|---|---|
| **T1** | **100** |
| **C2** | **160** |
| **C3** | **180** |

Les compositions C2 et C3 présentent des niveaux de résistance à la fissuration supérieurs au mélange témoin T1.

On peut donc en déduire que des bandes de roulement à base des compositions C2 et C3 permettent d'améliorer significativement la durée de vie de pneumatiques, puisque ces pneumatiques deviennent beaucoup moins sensibles à la propagation de fissure au niveau de leur bande de roulement.

## Revendications

1. Bande de roulement pour pneumatique qui comprend une composition à base d'au moins :
- une matrice élastomère comprenant au moins 50 pce d'un polyisoprène et au plus 50 pce d'un élastomère diénique modifié, lequel élastomère diénique modifié comprend au sein de sa structure au moins une fonction comprenant un atome d'azote et au moins un groupe alcoxysilane lié à l'élastomère par l'atome de silicium,
- une charge renforçante comprenant du noir de carbone à titre de charge majoritaire.

2. Bande de roulement selon la revendication 1 , dans laquelle le polyisoprène est un caoutchouc naturel.

3. Bande de roulement selon l'une quelconque des revendications 1 à 2, dans laquelle la fonction comprenant un atome d'azote est située en extrémité de chaîne et est directement reliée à l'élastomère par l'intermédiaire d'une liaison covalente ou d'un groupement hydrocarboné.

4. Bande de roulement selon l'une quelconque des revendications 1 à 2, dans laquelle la fonction comprenant un atome d'azote est portée par le silicium du groupe alcoxysilane, directement ou par l'intermédiaire d'un groupe espaceur défini comme étant un atome ou un radical hydrocarboné divalent, linéaire ou ramifié, aliphatique en C1-C18, saturé ou non, cyclique ou non, ou un radical hydrocarboné divalent aromatique en C6-C18, ledit groupement espaceur contenant éventuellement un ou plusieurs radicaux aromatiques et/ou un ou plusieurs hétéroatomes.

5. Bande de roulement selon la revendication 4 dans laquelle le groupe alcoxysilane est représenté par la formule
(*-)ₐSi (OR')_{b}R_{c}X
dans laquelle,
- *- représente la liaison à une chaîne élastomère ;
- le radical R représente un radical alkyle, substitué ou non substitué, en C₁-C₁₀, voire en C₁-C₈, de préférence un radical alkyle en C₁-C₄, plus préférentiellement méthyle et éthyle ;
- dans le ou les radicaux alcoxyle de formule -OR', éventuellement partiellement ou totalement hydrolysés en hydroxyle, R' représente un radical alkyle, substitué ou non substitué, étant en C₁-C₁₀, voire en C₁-C₈, de préférence un radical alkyle en C₁-C₄, plus préférentiellement méthyle et éthyle ;
- X représente un groupement incluant la fonction comprenant un atome d'azote;
- a vaut 1 ou 2, b vaut 1 ou 2, et c vaut 0 ou 1, sous réserve que a+b+c =3.

6. Bande de roulement selon l'une quelconque des revendications 1 à 5, dans laquelle la fonction comprenant un atome d'azote est choisie parmi les amines primaires, protégée ou non, secondaires, protégée ou non, ou tertiaires, cycliques ou non.

7. Bande de roulement selon la revendication 6, dans laquelle la fonction comprenant un atome d'azote est une fonction amine tertiaire, de préférence diéthylamine ou diméthylamine.

8. Bande de roulement selon l'une quelconque des revendications 1 à 7, dans laquelle élastomère diénique modifié selon l'invention est obtenu par le procédé comprenant les étapes suivantes :
- la polymérisation anionique d'au moins un monomère diène conjugué ou la polymérisation d'au moins un monomère diène conjugué et un monomère vinylaromatique, en présence d'un initiateur de polymérisation en vue de former un élastomère diénique vivant ;
- la fonctionnalisation de l'élastomère diénique vivant issu de la polymérisation de l'étape précédente au moyen d'un agent de fonctionnalisation pour préparer l'élastomère diénique modifié.

9. Bande de roulement selon la revendication 8, dans laquelle l'agent de fonctionnalisation répond à la formule :
(OR')_{d} Si(R)_{c}X
dans laquelle,
▪ dans les radicaux alcoxyle de formule -OR', éventuellement partiellement ou totalement hydrolysable, R' représente un radical alkyle, substitué ou non substitué, en C₁-C₁₀, voire en C₁-C₈, de préférence un groupe alkyle en C₁-C₄, plus préférentiellement méthyle et éthyle ;
▪ R représente un radical alkyle, substitué ou non substitué, en C₁-C₁₀, voire en C₁-C₈, de préférence un groupe alkyle en C₁-C₄, plus préférentiellement méthyle et éthyle ;
▪ X représente un groupement incluant une fonction comprenant un atome d'azote ;
▪ d vaut 2 ou 3, c vaut 0 ou 1, sous réserve que d+c =3.

10. Bande de roulement selon la revendication 9, dans laquelle l'agent de fonctionnalisation est un (N,N-dialkylaminoalkyl)trialcoxysilane, un (N,N-trialkyl silyl alkylaminoalkyl)trialcoxysilane ou un (N,N-bistrialkyl silyl aminoalkyl)trialcoxysilanele groupement trialkyl silyl étant de préférence triméthylsilyle et le groupement hydrocarboné divalent permettant de lier la fonction amine au groupe trialcoxysilane étant aliphatique en C₁-C₁₀, plus particulièrement linéaire en C₂ ou C₃.

11. Bande de roulement selon l'une quelconque des revendications 8 à 10, dans laquelle le rapport molaire de l'agent de fonctionnalisation au métal de l'initiateur de polymérisation varie de 0,35 à 0,65, préférentiellement de 0,40 à 0,60 et encore plus préférentiellement de 0,45 à 0,55.

12. Bande de roulement selon l'une quelconque des revendications 1 à 11, dans laquelle l'élastomère diénique modifié est majoritairement fonctionnalisé en milieu de chaîne par un groupe alcoxysilane, lié aux deux branches de l'élastomère diénique par l'intermédiaire de l'atome de silicium, le radical alcoxy étant éventuellement partiellement ou totalement hydrolysé en hydroxyle.

13. Bande de roulement selon l'une quelconque des revendications 1 à 12, dans laquelle au moins une des caractéristiques suivantes est respectée, au moins deux, au moins trois, voire au moins quatre et de préférence toutes :
- la fonction comprenant un atome d'azote est une amine tertiaire, plus particulièrement un groupement diéthylamino- ou diméthylamino-,
- la fonction comprenant un atome d'azote est portée par le groupe alcoxysilane par l'intermédiaire d'un groupement espaceur défini comme un radical hydrocarboné aliphatique en C₁-C₁₀, plus préférentiellement encore le radical hydrocarboné linéaire en C₂ ou C₃,
- le groupe alcoxysilane est un méthoxysilane ou un éthoxysilane, éventuellement partiellement ou totalement hydrolysé en silanol,
- l'élastomère diénique est un copolymère butadiène-styrène,
- l'élastomère diénique modifié est majoritairement fonctionnalisé en milieu de chaîne par un groupe alcoxysilane lié aux deux branches de l'élastomère diénique par l'intermédiaire de l'atome de silicium.

14. Bande de roulement selon la revendication 13, dans laquelle l'élastomère modifié est un élastomère diénique pour lequel :
- l'élastomère diénique comprend à titre d'espèce majoritaire l'élastomère diénique fonctionnalisé en milieu de chaîne par un groupe alcoxysilane lié aux deux branches de l'élastomère diénique par l'intermédiaire de l'atome de silicium;
- la fonction comprenant un atome d'azote est portée par le groupe alcoxysilane par l'intermédiaire d'un radical hydrocarboné aliphatique linéaire en C₃,
- la fonction comprenant un atome d'azote est une amine tertiaire, plus particulièrement un groupement diéthylamino- ou diméthylamino-;
- le groupe alcoxysilane est le méthoxysilane ou l'éthoxysilane, éventuellement partiellement ou totalement hydrolysé en silanol,
- l'élastomère diénique est un copolymère butadiène-styrène,

15. Pneumatique comportant une bande de roulement selon l'une quelconque des revendications 1 à 14.

## Patentansprüche

1. Reifenlauffläche, die eine Zusammensetzung auf Basis von mindestens
- einer Elastomermatrix, umfassend mindestens 50 phe eines Polyisoprens und höchstens 50 phe eines modifizierten Dienelastomers, wobei das modifizierte Dienelastomer in seiner Struktur mindestens eine Funktion, die ein Stickstoffatom umfasst, und mindestens eine Alkoxysilangruppe, die über das Siliciumatom das Elastomer gebunden ist, umfasst,
- einen verstärkenden Füllstoff, der als hauptsächlichen Füllstoff Ruß umfasst,
umfasst.

2. Lauffläche nach Anspruch 1, wobei es sich bei dem Polyisopren um einen Naturkautschuk handelt.

3. Lauffläche nach einem der Ansprüche 1 bis 2, wobei die Funktion, die ein Stickstoffatom umfasst, am Kettenende steht und über eine kovalente Bindung oder eine Kohlenwasserstoffgruppe direkt an das Elastomer gebunden ist.

4. Lauffläche nach einem der Ansprüche 1 bis 2, wobei die Funktion, die ein Stickstoffatom umfasst, direkt oder über eine Spacergruppe, die als ein Atom oder ein gesättigter oder ungesättigter, cyclischer oder acyclischer, linearer oder verzweigter, zweiwertiger aliphatischer C₁-C₁₈-Kohlenwasserstoffrest oder ein zweiwertiger aromatischer C₆-C₁₈-Kohlenwasserstoffrest definiert ist, an das Silicium der Alkoxysilangruppe gebunden ist, wobei die Spacergruppe gegebenenfalls einen oder mehrere aromatische Reste und/oder ein oder mehrere Heteroatome enthält.

5. Lauffläche nach Anspruch 4, wobei die Alkoxysilangruppe durch die Formel
(*-)ₐSi(OR')_{b}R_{c}X
wiedergegeben wird, in der
- *- für die Bindung an eine Elastomerkette steht;
- R für einen substituierten oder unsubstituierten C₁-C₁₀- oder sogar C₁-C₈-Alkylrest, vorzugsweise einen C₁-C₄-Alkylrest, weiter bevorzugt Methyl und Ethyl, steht;
- in dem Alkoxyrest bzw. den Alkoxyresten der Formel -OR', der bzw. die gegebenenfalls teilweise oder vollständig zu Hydroxyl hydrolysiert ist bzw. sind, R' für einen substituierten oder unsubstituierten C₁-C₁₀- oder sogar C₁-C₈-Alkylrest, vorzugsweise einen C₁-C₄-Alkylrest, weiter bevorzugt Methyl und Ethyl, steht;
- X für eine Gruppe, die die Funktion, die ein Stickstoffatom umfasst, enthält, steht;
- a gleich 1 oder 2 ist, b gleich 1 oder 2 ist und c gleich 0 oder 1 ist, mit der Maßgabe, dass a + b + c = 3.

6. Lauffläche nach einem der Ansprüche 1 bis 5, wobei die Funktion, die ein Stickstoffatom umfasst, aus geschützten oder ungeschützten primären Aminen, geschützten oder ungeschützten sekundären Aminen oder cyclischen oder acyclischen tertiären Aminen ausgewählt ist.

7. Lauffläche nach Anspruch 6, wobei es sich bei der Funktion, die ein Stickstoffatom umfasst, um eine tertiäre Aminfunktion, vorzugsweise Diethylamin oder Dimethylamin, handelt.

8. Lauffläche nach einem der Ansprüche 1 bis 7, wobei das erfindungsgemäße modifizierte Dienelastomer durch das Verfahren erhalten wird, das folgende Schritte umfasst:
- die anionische Polymerisation mindestens eines konjugierten Dienmonomers oder die Polymerisation mindestens eines konjugierten Dienmonomers und eines vinylaromatischen Monomers in Gegenwart eines Polymerisationsinitiators zur Bildung eines lebenden Dienelastomers;
- die Funktionalisierung des lebenden Dienelastomers aus der Polymerisation des vorhergehenden Schritts mit einem Funktionalisierungsmittel zur Herstellung des modifizierten Dienelastomers.

9. Lauffläche nach Anspruch 8, wobei das Funktionalisierungsmittel der Formel
(OR')_{d}Si (R)_{c}X
entspricht, in der
▪ in den Alkoxyresten der Formel -OR', die gegebenenfalls teilweise oder vollständig zu Hydroxyl hydrolysiert sind, R' für einen substituierten oder unsubstituierten C₁-C₁₀- oder sogar C₁-C₈-Alkylrest, vorzugsweise einen C₁-C₄-Alkylrest, weiter bevorzugt Methyl und Ethyl, steht;
▪ R für einen substituierten oder unsubstituierten C₁-C₁₀- oder sogar C₁-C₈-Alkylrest, vorzugsweise einen C₁-C₄-Alkylrest, weiter bevorzugt Methyl und Ethyl, steht;
▪ X für eine Gruppe, die die Funktion, die ein Stickstoffatom umfasst, enthält, steht;
▪ d gleich 2 oder 3 ist, c gleich 0 oder 1 ist, mit der Maßgabe, dass d + c = 3.

10. Lauffläche nach Anspruch 9, wobei es sich bei dem Funktionalisierungsmittel um ein (N,N-Dialkylaminoalkyl)trialkoxysilan, ein (N,N-Trialkylsilyl-alkylaminoalkyl)trialkoxysilan oder ein (N,N-Bistrialkylsilylaminoalkyl)trialkoxysilan handelt wobei es sich bei der Trialkylsilylgruppe vorzugsweise um Trimethylsilyl handelt und wobei es sich bei der zweiwertigen Kohlenwasserstoffgruppe, die die Anbindung der Aminfunktion an die Trialkoxysilangruppe erlaubt, um eine aliphatische C₁-C₁₀-Gruppe, spezieller eine lineare C₂- oder C₃-Gruppe, handelt.

11. Lauffläche nach einem der Ansprüche 8 bis 10, wobei das Molverhältnis von Funktionalisierungsmittel zu Metall des Polymerisationsinitiators im Bereich von 0,35 bis 0,65, Vorzugsweise von 0,40 bis 0,60 und weiter bevorzugt von 0,45 bis 0,55 liegt.

12. Lauffläche nach einem der Ansprüche 1 bis 11, wobei das modifizierte Dienelastomer hauptsächlich in der Kettenmitte durch eine Alkoxysilangruppe, die über das Siliciumatom an die beiden Arme des Dienelastomers gebunden ist, modifiziert ist, wobei der Alkoxyrest gegebenenfalls teilweise oder vollständig zu Hydroxyl hydrolysiert ist.

13. Lauffläche nach einem der Ansprüche 1 bis 12, wobei mindestens eines, mindestens zwei, mindestens drei oder sogar mindestens vier und vorzugsweise alle der folgenden Merkmale erfüllt sind:
- bei der Funktion, die ein Stickstoffatom umfasst, handelt es sich um ein tertiäres Amin, spezieller eine Diethylamino- oder Dimethylaminogruppe,
- die Funktion, die ein Stickstoffatom umfasst, ist über eine Spacergruppe, die als ein aliphatischer C₁-C₁₀-Kohlenwasserstoffrest, noch weiter bevorzugt der lineare C₂- oder C₃-Kohlenwasserstoffrest, definiert ist, an das Silicium der Alkoxysilangruppe gebunden,
- bei der Alkoxysilangruppe handelt es sich um ein Methoxysilan oder ein Ethoxysilan, das gegebenenfalls teilweise oder vollständig zu Silanol hydrolysiert ist,
- bei dem Dienelastomer handelt es sich um ein Butadien-Styrol-Copolymer,
- das modifizierte Dienelastomer ist hauptsächlich in der Kettenmitte durch eine Alkoxysilangruppe, die über das Siliciumatom an die beiden Arme des Dienelastomers gebunden ist, modifiziert.

14. Lauffläche nach Anspruch 13, wobei es sich bei dem modifizierten Elastomer um ein Dienelastomer handelt, für das:
- das Dienelastomer als hauptsächliche Spezies das Dienelastomer, das in der Kettenmitte durch eine Alkoxysilangruppe, die über das Siliciumatom an die beiden Arme des Dienelastomers gebunden ist, modifiziert ist, umfasst;
- die Funktion, die ein Stickstoffatom umfasst, über einen linearen aliphatischen C₃-Kohlenwasserstoffrest an die Alkoxysilangruppe gebunden ist,
- es sich bei der Funktion, die ein Stickstoffatom enthält, um ein tertiäres Amin, spezieller eine Diethylamino- oder Dimethylaminogruppe, handelt;
- es sich bei der Alkoxysilangruppe um ein Methoxysilan oder ein Ethoxysilan, das gegebenenfalls teilweise oder vollständig zu Silanol hydrolysiert ist, handelt;
- es sich bei dem Dienelastomer um ein Butadien-Styrol-Copolymer handelt.

15. Reifen, umfassend eine Lauffläche nach einem der Ansprüche 1 bis 14.

## Claims

1. Tyre tread which comprises a composition based on at least:
- an elastomer matrix comprising at least 50 phr of a polyisoprene and at most 50 phr of a modified diene elastomer, which modified diene elastomer comprises, within its structure, at least one function comprising a nitrogen atom and at least one alkoxysilane group bonded to the elastomer via the silicon atom,
- a reinforcing filler comprising carbon black as predominant filler.

2. Tread according to Claim 1 in which the polyisoprene is a natural rubber.

3. Tread according to any one of Claims 1 to 2, in which the function comprising a nitrogen atom is located at the chain end and is directly connected to the elastomer via a covalent bond or a hydrocarbon-based group.

4. Tread according to any one of Claims 1 to 2, in which the function comprising a nitrogen atom is borne by the silicon of the alkoxysilane group, directly or via a spacer group defined as being an atom or a saturated or unsaturated, cyclic or non-cyclic, linear or branched, divalent C₁-C₁₈ aliphatic hydrocarbon-based radical or a divalent C₆-C₁₈ aromatic hydrocarbon-based radical, said spacer group optionally containing one or more aromatic radicals and/or one or more heteroatoms.

5. Tread according to Claim 4, in which the alkoxysilane group is represented by the formula
(*-)ₐSi (OR')_{b}R_{c}X
in which:
- *- represents the bond to an elastomer chain;
- the radical R represents a substituted or unsubstituted C₁-C₁₀, or even C₁-C₈, alkyl radical, preferably a C₁-C₄ alkyl radical, more preferentially methyl and ethyl;
- in the alkoxyl radical(s) of formula -OR', which is (are) optionally partially or completely hydrolysed to give hydroxyl, R' represents a substituted or unsubstituted C₁-C₁₀, or even C₁-C₈, alkyl radical, preferably a C₁-C₄ alkyl radical, more preferentially methyl and ethyl;
- X represents a group including the function comprising a nitrogen atom;
- a is 1 or 2, b is 1 or 2, and c is 0 or 1, with the proviso that a+b+c =3.

6. Tread according to any one of Claims 1 to 5, in which the function comprising a nitrogen atom is chosen from protected or unprotected primary amines, protected or unprotected secondary amines or cyclic or non-cyclic tertiary amines.

7. Tread according to Claim 6, in which the function comprising a nitrogen atom is a tertiary amine function, preferably diethylamine or dimethylamine.

8. Tread according to any one of Claims 1 to 7, in which the modified diene elastomer according to the invention is obtained by the process comprising the following steps:
- the anionic polymerization of at least one conjugated diene monomer or the polymerization of at least one conjugated diene monomer and a vinylaromatic monomer, in the presence of a polymerization initiator, with a view to forming a living diene elastomer;
- the functionalization of the living diene elastomer resulting from the polymerization of the preceding step by means of a functionalization agent in order to prepare the modified diene elastomer.

9. Tread according to Claim 8, in which the functionalization agent corresponds to the formula:
(OR')_{d} Si(R)_{c}X
in which:
▪ in the alkoxyl radicals of formula -OR', which are optionally partially or completely hydrolysable, R' represents a substituted or unsubstituted C₁-C₁₀, or even C₁-C₈, alkyl radical, preferably a C₁-C₄ alkyl group, more preferentially methyl and ethyl;
▪ R represents a substituted or unsubstituted C₁-C₁₀, or even C₁-C₈, alkyl radical, preferably a C₁-C₄ alkyl group, more preferentially methyl and ethyl;
▪ X represents a group including a function comprising a nitrogen atom;
▪ d is 2 or 3, c is 0 or 1, with the proviso that d+c =3.

10. Tread according to Claim 9, in which the functionalization agent is a (N,N-dialkylaminoalkyl)trialkoxysilane, a (N,N-trialkylsilylalkylaminoalkyl)trialkoxysilane or a (N,N-bistrialkylsilylaminoalkyl)trialkoxysilane, the trialkylsilyl group preferably being trimethylsilyl and the divalent hydrocarbon-based group that makes it possible to bond the amine function to the trialkoxysilane group being C₁-C₁₀ aliphatic, more particularly C₂ or C₃ linear.

11. Tread according to any one of Claims 8 to 10, in which the molar ratio of the functionalization agent to the metal of the polymerization initiator ranges from 0.35 to 0.65, preferentially from 0.40 to 0.60 and even more preferentially from 0.45 to 0.55.

12. Tread according to any one of Claims 1 to 11, in which the modified diene elastomer is predominantly functionalized in the middle of the chain by an alkoxysilane group, bonded to the two branches of the diene elastomer via the silicon atom, the alkoxy radical optionally being partially or completely hydrolysed to give hydroxyl.

13. Tread according to any one of Claims 1 to 12, in which at least one, at least two, at least three, or even at least four and preferably all of the following characteristics is observed:
- the function comprising a nitrogen atom is a tertiary amine, more particularly a diethylamino- or dimethylamino- group,
- the function comprising a nitrogen atom is borne by the alkoxysilane group via a spacer group defined as a C₁-C₁₀ aliphatic hydrocarbon-based radical, more preferentially still the linear C₂ or C₃ hydrocarbon-based radical,
- the alkoxysilane group is a methoxysilane or an ethoxysilane, optionally partially or completely hydrolysed to give silanol,
- the diene elastomer is a butadiene/styrene copolymer,
- the modified diene elastomer is predominantly functionalized in the middle of the chain by an alkoxysilane group bonded to the two branches of the diene elastomer via the silicon atom.

14. Tread according to Claim 13, in which the modified elastomer is a diene elastomer for which:
- the diene elastomer comprises, as predominant entity, the diene elastomer functionalized in the middle of the chain by an alkoxysilane group bonded to the two branches of the diene elastomer via the silicon atom;
- the function comprising a nitrogen atom is borne by the alkoxysilane group via a linear C₃ aliphatic hydrocarbon-based radical,
- the function comprising a nitrogen atom is a tertiary amine, more particularly a diethylamino- or dimethylamino- group;
- the alkoxysilane group is methoxysilane or ethoxysilane, optionally partially or completely hydrolysed to give silanol,
- the diene elastomer is a butadiene/styrene copolymer.

15. Tyre comprising a tread according to any one of Claims 1 to 14.
